# EUROPÄISCHE PATENTSCHRIFT

(11) **EP 0 660 074 B1**
(45) Veröffentlichungstag und Bekanntmachung des Hinweises auf die Patenterteilung: **29.12.1997**
(21) Anmeldenummer: 94118748.6
(22) Anmeldetag: 29.11.1994
(51) Int. Cl.: G01B 11/02, G01B 11/00, G01N 21/15, B41F 33/00

(54) **Fotoelektrischer Messkopf**
Photoelectric measuring head
Tête de mesure photoélectrique

(30) Priorität: 22.12.1993 DE 4343810
(43) Veröffentlichungstag der Anmeldung: 28.06.1995
(73) Patentinhaber: MAN Roland Druckmaschinen AG, 63075 Offenbach (DE)
(72) Erfinder: Rakitsch, Peter, D-85368 Moosburg (DE); Zehentbauer, Hans, D-82110 Germering (DE)
(74) Vertreter: Marek, Joachim, Dipl.-Ing.

(56) Entgegenhaltungen:
- DD-A- 260 032
- DE-A- 3 110 712
- US-A- 4 710 912
- PATENT ABSTRACTS OF JAPAN vol. 013 no. 158 (C-586), 17.April 1989 & JP-A-63 315529 (ISHIZUKA GLASS LTD)

## Beschreibung

Die Erfindung betrifft einen fotoelektrischen Meßkopf gemäß dem Oberbegriff von Anspruch 1.

In der graphischen Industrie dienen fotoelektrische Meßköpfe dazu, um insbesondere nach dem Auflichtverfahren die Remissionen von Testbereichen eines gedruckten Bogens zu erfassen. Der fotoelektrische Meßkopf kann dabei insbesondere als ein spektraler Farbmeßkopf, als ein Dreibereichs-Farbmeßkopf oder Densitometermeßkopf ausgebildet sein. Bei den Meßbereichen des gedruckten Bogens handelt es sich beispielsweise um extra mitgedruckte Meßfelder, die entweder in Form eines Druckkontrollstreifens in einer Linie angeordnet oder beliebig über das Format verteilt sind bzw. um sogenannte bildwichtige Stellen des Sujets. Der Einsatz eines fotoelektrischen Meßkopfes bei Druckerzeugnissen, die gerade der Druckmaschine entnommen wurden sind, ist besonders kritisch, da die Farbe bzw. der aufgetragene Lack noch frisch sind und ein Verschmieren der Farbe bzw. des Lackes unbedingt vermieden werden muß.

Aus der DD 260 032 A1 ist ein spektraler Meßkopf in Form eines Densitometers bekannt, der über Schlittenführungen in der X- und Y-Achse parallel zur Ebene eines auf einer Unterlage aufliegenden Bogens verschiebbar ist. An der Unterseite des Meßkopfes, also an der Seite, welche dem Meßobjekt zugewandt ist, sind Luftaustrittsöffnungen angeordnet, durch welche Druckluft ausgeblasen wird. Es baut sich somit ein Luftkissen auf, welches den Meßkopf entgegen seiner Gewichtskraft schwebend und somit berührungsfrei über der auszumessenden Fläche trägt. Der Meßkopf ist ferner höhenverschieblich und gelenkig mit der ihm führenden Einrichtung verbunden.

Bei diesem vorbekannten Meßkopf sind zur Erzeugung des tragenden Luftpolsters in gleichmäßiger Verteilung entlang des äußeren Randes der Unterseite des Meßkopfes Bohrungen angeordnet, über welche die Druckluft austritt. Problematisch ist hierbei die Zuleitung von Druckluft zu den entsprechenden Luftaustrittsbohrungen, da gewährleistet sein muß, daß über jede Austrittsbohrung die gleiche Luftmenge pro Zeiteinheit ausgeblasen wird. Ist dies nicht der Fall, insbesondere wenn dies an diametral gegenüberliegenden Seiten auftritt, so kann eine Kippneigung des Meßkopfes eintreten. Die an jeder Bohrung austretende Druckluft strömt dabei über einen relativ großen Querschnitt mit sehr hoher Austrittsgeschwindigkeit, so daß Wirbel entstehen. Die Wirbel benachbarter Austrittsöffnungen können sich dabei derartig gegenseitig beeinflussen, so daß das den Meßkopf tragende Luftkissen unter Umständen in Schwingungen gerät. Der streng konstant zu haltende Abstand der Meßoptik zur auszumessenden Fläche wird dann nicht mehr eingehalten, was die Meßgenauigkeit beeinträchtigt.

Aufgabe der vorliegenden Erfindung ist es daher, einen fotoelektrischen Meßkopf gemäß dem Oberbegriff von Anspruch 1 derartig zu erweitern, so daß der Meßkopf durch ein Luftkissen im geringstmöglichen Abstand stabil über der Unterlage getragen werden kann.

Gelöst wird diese Aufgabe durch die kennzeichnenden Merkmale von Anspruch 1. Weiterbildungen der Erfindung ergeben sich aus den Unteransprüchen.

Gemäß der Erfindung sind die Austrittsöffnungen für die Druckluft aus einer, auf Grund einer mikroporösen Struktur luftdurchlässigen Platte gebildet. Insbesondere handelt es sich bei dieser mikroporösen, luftdurchlässigen Platte um ein Sintermetall. Die luftdurchlässig poröse Struktur, also die Größe der den Luftdurchsatz gewährleisteten Kanäle liegt dabei in der Größenordnung Hundertstel Millimeter.

Auf Grund der Vielzahl, stochastisch über die Plattenoberfläche verteilte Mikrodüsen, wird dem Entstehen einer Vorzugsrichtung der ausströmenden Luft und damit dem Entstehen von Drehmomenten, die ein Kippen des Meßkopfs nach sich ziehen würden, vorgebeugt. Die Druckluft tritt durch diese Platte im mikroskopischen Bereich turbulent, im makroskopischen Bereich laminar aus. Insbesondere kann mit einer derartigen, auf Grund einer mikroporösen Struktur luftdurchlässigen Platte über deren zur Unterlage gewandten Oberfläche ein stabiler und gleichmäßiger Tragdruck erzeugt werden. Der Meßkopf, der über das durch diese Platte erzeugte Luftkissen getragen wird, kann dabei in einem geringstmöglichen Abstand (ca. 0.2 mm) zur Unterlage stabil gehalten werden.

Insbesondere kann die, auf Grund der mikroporösen Struktur luftdurchlässige Platte als eine ringförmige Scheibe ausgebildet sein, welche konzentrisch zur Meßoptik an der Unterseite des Meßkopfes ausgebildet sein. So ergibt sich ein gleichmäßiges Abströmen der austretenden Druckluft in radialer Richtung. Die Meßoptik wird so in vorteilhafter Weise zusätzlich gegen Ablagerung von Staub und der gleichen geschützt.

Der fotoelektrische Meßkopf gemäß Erfindung kann sowohl bei einer in einer Achsrichtung als auch bei einer in einer Ebene verfahrenen Meßanlage vorteilhafterweise eingesetzt werden. Dabei ist es besonders vorteilhaft, wenn der Meßkopf gemäß Erfindung über eine extrem leichtgängige Linearführung an der Verfahreinrichtung aufgehängt ist. Hier wird in besonders vorteilhafter Weise eine sogenannte Kreuzrollenführung angewendet. Diese kennzeichnet sich dadurch, daß zwischen den am Meßkopf angebrachten Führungsteilen und den Führungsteilen der Verfahraufhängung zylindrische Rollen angeordnet sind, derart, daß die Achsen jeweils einer Gruppe von Rollen in einer Ebene liegen und diese Ebene eine andere, durch die Achsen einer anderen Gruppe von Zylinderrollen unter einem mehr oder weniger spitzen Winkel schneidet.

Des weiteren erfolgt die Erläuterung eines Ausführungsbeispiels der Erfindung anhand der Zeichnung.

Es zeigt:
- Fig. 1: einen Schnitt durch den fotoelektrischen Meßkopf gemäß Erfindung, und
- Fig. 2: eine Draufsicht auf die Unterseite des Meßkopfes.

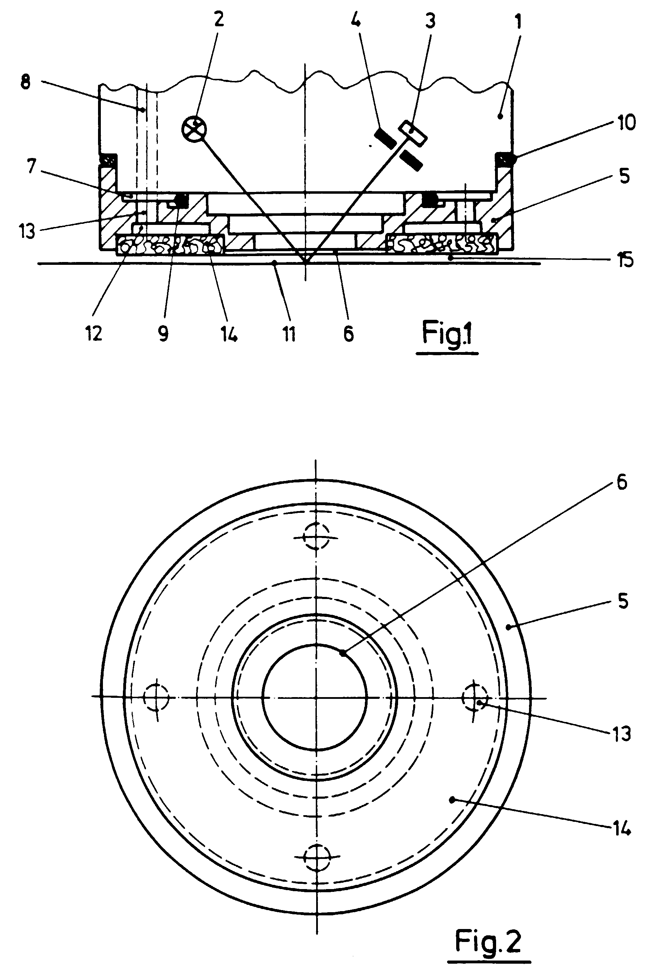

Fig. 1 zeigt im Schnitt einen Meßkopf 1, mit darin angeordneter Beleuchtung 2 sowie einem fotoelektrischen Empfänger 3, dem eine Blende 4 vorgeordnet ist. Die dargestellte Geometrie zwischen Beleuchtung 2 und fotoelektrischen Empfänger 3 ist hierbei rein symbolisch. An der unteren Fläche des Meßkopfes 1 ist ein Deckel 5 aufgesetzt, in dessen Mitte eine kreisrunde Öffnung 6 als Meßblende vorgesehen ist. Diese Öffnung 6 erweitert sich stufenweise und jeweils konzentrisch zur Mittelachse des Meßkopfes 1 in Richtung der optischen Einrichtung bestehend aus Beleuchtung 2 und fotoelektrischen Empfänger 3.

An der zur Unterseite des Meßkopfes 1 zugewandten Seite des Deckels 5 ist eine ringförmige und konzentrisch zur Mittelachse des Meßkopfes 1 verlaufende Kammer 7 eingearbeitet. Diese Kammer 7 ist über eine Bohrung 8 im Meßkopf 1 mit Druckluft beaufschlagbar. Damit die in die Kammer 7 eingeleitete Druckluft nicht entweichen kann, sind beidseitig der Kammer 7 bzw. an einer Seite der Kammer 7 und im Bereich zwischen Deckel 5 und Meßkopf 1 je ein Dichtring 9, 10 angeordnet.

An der zur Unterlage 11 hingewandten Seite des Deckels 5 - die Unterlage 11 wird durch den auszumessenden Druckbogen gebildet - ist eine weitere, ebenfalls konzentrisch zur Mittelachse des Meßkopfes 1 verlaufende Kammer 12 eingearbeitet. Die Kammer 12 hat hierbei insbesondere ebenfalls den gleichen rechteckigen Querschnitt wie die Kammer 7. Über vier gleichmäßig auf einem konzentrisch zur Mittelachse des Meßkopfes 1 verlaufenden Kreis verteilte Bohrungen 13 ist die kreisförmige Kammer 12 mit der kreisförmigen Kammer 7 verbunden. Zur Unterlage 11 hin ist in einer entsprechenden Aufweitung der Kammer 12 im Deckel 5 die Kammer 12 mit einer ringförmigen Platte 14 aus Sintermetall abgeschlossen.

Die über die Bohrung 8 im Meßkopf 1 in die Kammer 7 eingeleitete Druckluft gelangt somit über die Bohrungen 13 in die ringförmige Kammer 12 und tritt daher über die gesamte Fläche der Platte 14 gleichmäßig an der Unterseite des Deckels 5 aus. Es entsteht somit zwischen der zur Unterlage 11 gewandten Seite der Platte 14 und der Unterlage 11 ein Luftkissen 15. Dieses Luftkissen 15 trägt den Meßkopf 1 entgegen seiner Gewichtskraft.

Fig. 2 zeigt eine Draufsicht auf die Unterseite des Meßkopfes 1 bzw. des Deckels 5. Dargestellt ist in der Mitte die kreisförmige Öffnung 6 im Deckel 5 sowie die diesbezüglich konzentrische Anordnung der ringförmigen Platte 14. In diesem Ausführungsbeispiel weist der Deckel 5 einen kreisförmigen Querschnitt auf und ist an dem hier nicht dargestellten, ebenfalls einen kreisförmigen Querschnitt aufweisenden Meßkopf 1 beispielsweise über ein Gewinde oder mittels nicht dargestellten Schrauben befestigt.

Nicht gezeigt ist neben dem Ausführungsbeispiel gemäß der Figuren 1 und 2 die Aufhängung des Meßkopfes 1 an eine ihn führende Einrichtung. Wie bereits angedeutet, findet hierbei bevorzugt eine sehr leichtgängige Kreuzrollenführung Verwendung. Diese ermöglicht eine präzise Vertikalführung bei extremer Leichtgängigkeit. Das den Meßkopf 1 tragende Luftkissen 15 erfährt somit durch eine derartig ausgebildete Führung keine zusätzlichen Kräfte.

### Bezugszeichenliste

- 1: Meßkopf
- 2: Beleuchtung
- 3: fotoelektrischer Empfänger
- 4: Blende
- 5: Deckel
- 6: Öffnung
- 7: Kammer
- 8: Bohrung
- 9: Dichtring
- 10: Dichtring
- 11: Unterlage
- 12: Kammer
- 13: Bohrung
- 14: Platte
- 15: Luftkissen

## Patentansprüche

1. Fotoelektrischer Meßkopf zum berührungslosen Abtasten von Meßbereichen, insbesondere von Meßfeldern auf einem eben aufliegenden Druckbogen, wobei an der Unterseite des Meßkopfes Austrittsöffnungen für Druckluft angebracht sind,
**dadurch gekennzeichnet**,
daß die Austrittsöffnungen aus einer, auf Grund einer mikroporösen Struktur luftdurchlässigen Platte (14) gebildet sind.

2. Fotoelektrischer Meßkopf nach Anspruch 1,
**dadurch gekennzeichnet**,
daß die Platte (14) aus einem Sintermetall besteht.

3. Fotoelektrischer Meßkopf nach Anspruch 1 und 2,
**dadurch gekennzeichnet**,
daß die Platte (14) aus einem Sintermetall besteht.

4. Fotoelektrischer Meßkopf nach einem der vorhergehenden Ansprüche,
**dadurch gekennzeichnet**,
daß die Platte (14) in Form einer konzentrisch zur Mittelachse des Meßkopfes (1) verlaufenden ringförmigen Scheibe ausgebildet ist.

5. Fotoelektrischer Meßkopf nach Anspruch 4, **dadurch gekennzeichnet**, daß die Öffnung (6) für die fotoelektrische Abtasteinrichtung (2, 3, 4) im Zentrum der als ringförmigen Scheibe ausgebildeten Platte (14) angeordnet ist.

6. Fotoelektrischer Meßkopf nach einem der vorhergehenden Ansprüche,
**dadurch gekennzeichnet**,
daß die Platte (14) an einem an der Unterseite des Meßkopfes (1) angebrachten Deckel (5) angebracht ist.

7. Fotoelektrischer Meßkopf nach einem der vorhergehenden Ansprüche,
**dadurch gekennzeichnet**,
daß der Meßkopf (1) über eine Kreuzrollenführung vertikal beweglich an einer Verfahreinrichtung angelenkt ist.

## Claims

1. Photoelectric measuring head for contact-free sensing of measuring regions, in particular of measuring fields on an evenly lying printed sheet, wherein, on the underside of the measuring head, outlet openings for compressed air are installed, characterised in that the outlet openings are formed by a plate (14) air permeable on the basis of a microporous structure.

2. Photoelectric measuring head according to Claim 1, characterised in that the plate (14) is made from a substance arising from particles sintered together.

3. Photoelectric measuring head according to Claim 1 and 2, characterised in that the plate (14) consists of a sintered metal.

4. Photoelectric measuring head according to one of the preceding Claims, characterised in that the plate (14) is constructed in the form of an annular disc running concentrically to the central axis of the measuring head (1).

5. Photoelectric measuring head according to Claim 4, characterised in that the opening (6) for the photoelectric sensing unit (2, 3, 4) is arranged in the centre of the plate (14) constructed as an annular disc.

6. Photoelectric measuring head according to one of the preceding Claims, characterised in that the plate (14) is installed on a lid (5) installed on the underside of the measuring head (1).

7. Photoelectric measuring head according to one of the preceding Claims, characterised in that the measuring head (1) is vertically movably linked via a cross roller guide to a movement unit.

## Revendications

1. Tête de mesure photoélectrique pour l'exploration sans contact de zones de mesure, en particulier de champs de mesure sur une feuille d'impression reposant à plat, des ouvertures de sortie pour de l'air sous pression étant prévues sur le dessous de la tête de mesure,
caractérisée en ce que les ouvertures de sortie sont formées par une plaque (14) perméable à l'air en raison d'une structure microporeuse.

2. Tête de mesure photoélectrique selon la revendication 1,
caractérisée en ce que la plaque (14) est fabriquée en une substance constituée par des particules frittées ensemble.

3. Tête de mesure photoélectrique selon les revendications 1 et 2,
caractérisée en ce que la plaque (14) est constituée d'un métal fritté.

4. Tête de mesure photoélectrique selon une des revendications précédentes,
caractérisée en ce que la plaque (14) est réalisée sous forme d'un disque annulaire s'étendant de façon concentrique par rapport à l'axe central de la tête de mesure (1).

5. Tête de mesure photoélectrique selon la revendication 4,
caractérisée en ce que l'ouverture (6) pour le dispositif d'exploration photoélectrique (2,3,4) est agencée au centre de la plaque (14) réalisée sous forme de disque annulaire.

6. Tête de mesure photoélectrique selon une des revendications précédentes,
caractérisée en ce que la plaque (14) est prévue sur un couvercle (5) agencé sur le dessous de la tête de mesure (1).

7. Tête de mesure photoélectrique selon une des revendications précédentes,
caractérisée en ce que la tête de mesure (1) est articulée, de façon verticalement mobile, à un dispositif de déplacement par l'intermédiaire d'un guide à rouleaux croisés.
